# EUROPÄISCHE PATENTSCHRIFT

(11) **EP 3 437 155 B1**
(45) Veröffentlichungstag und Bekanntmachung des Hinweises auf die Patenterteilung: **10.11.2021**
(21) Anmeldenummer: 17709679.9
(22) Anmeldetag: 09.03.2017
(51) Int. Cl.: H01M 10/6556, H01M 10/6568

(54) **TEMPERIERVORRICHTUNG EINES BATTERIEMODULS, VERFAHREN ZU DESSEN HERSTELLUNG UND BATTERIEMODUL**
HEAT TRANSFER DEVICE OF A BATTERY MODULE, PROCESS OF PRODUCING THE HEAT TRANSFER DEVICE AND BATTERY MODULE
DISPOSITIF D'ECHANGE DE CHALEUR POUR MODULE DE BATTERIES, PROCÉDÉ DE PRODUCTION DE CELUI ET MODULE DE BATTERIES

(30) Priorität: 30.03.2016 DE 102016205237
(43) Veröffentlichungstag der Anmeldung: 06.02.2019
(73) Patentinhaber: Robert Bosch GmbH, 70442 Stuttgart (DE)
(72) Erfinder: SCHABER, Matthias, 13187 Berlin (DE); BENZ, Steffen, 70197 Stuttgart (DE); KOPP, Benjamin, 71686 Remseck Am Neckar (DE); LOEW, Christian, 70469 Stuttgart (DE)
(86) Internationale Anmeldenummer: PCT/EP2017/055549
(87) Internationale Veröffentlichungsnummer: WO 2017/167563

(56) Entgegenhaltungen:
- DE-A1-102013 200 859
- DE-A1-102014 217 546
- DE-T2- 69 823 156
- KR-A- 20140 026 961
- US-A1- 2014 216 702

## Beschreibung

### Stand der Technik

Die Erfindung geht aus von einer Temperiervorrichtung eines Batteriemoduls nach Gattung des unabhängigen Anspruchs. Gegenstand der vorliegenden Erfindung sind auch ein Verfahren zur Herstellung einer Temperiervorrichtung und ein Batteriemodul mit einer solchen Temperiervorrichtung.

Batteriezellen produzieren während des Betriebes aufgrund ihres elektrischen Widerstandes bei einem Stromfluss Wärme, welche abzuführen ist, um zu hohe Temperaturen zu vermeiden und um die Leistungsfähigkeit der Batteriezellen aufrecht zu erhalten. Für eine Abfuhr von Wärme aus den Batteriezellen, welche bevorzugt zu einem Batteriemodul verschaltet sind, wird insbesondere eine von einem Temperierfluid durchströmte Temperiervorrichtung an dem Batteriemodul angeordnet, wobei das Temperierfluid mittels eines Einlass in einen Strömungsraum der Temperiervorrichtung eingeführt wird und mittels eines Auslasses aus dem Strömungsraum abgeführt wird. Dabei wird die Wärme von den Batteriezellen über die Temperiervorrichtung an das in dem Strömungsraum strömende Temperierfluid übertragen. Für eine zuverlässige Entwärmung der Batteriezellen sollte der gesamte Strömungsraum bei einem möglichst geringen Druckverlust zwischen dem Einlass und dem Auslass gleichmäßig von dem Temperierfluid durchströmt werden, ohne dass Totbereiche mit einer verschwindenden Strömungsgeschwindigkeit entstehen.

Aus dem Stand der Technik ist beispielsweise aus der DE 10 2013 200 859 A1 eine Plattenbaugruppe für einen Wärmetauscher einer Batteriebaugruppe bekannt. Dabei weist die Plattenbaugruppe zumindest zwei einen Zwischenraum ausbildende im Wesentlichen planare und bevorzugt aus Kunststoff ausgebildete Elemente auf, wobei die zumindest zwei planaren Elemente durch Abstandshalter unter Ausbildung des Zwischenraums voneinander beabstandet sind. Dabei kann der Zwischenraum von einem Kühlmittel durchströmt werden. Weiterhin weist die Plattenbaugruppe innerhalb des Zwischenraumes eine Wand auf, welche gemeinsam mit den Abstandshaltern das Strömungsfeld des Kühlmittels innerhalb des Zwischenraums bestimmt. Des Weiteren weisen die planaren Elemente der Plattenbaugruppe Öffnungen zum Einströmen und zum Ausströmen des Kühlmittels auf.

Des Weiteren ist aus der EP 2 453 515 A1 eine Kühlvorrichtung für eine Batterie eines Elektrofahrzeuges bekannt. Dabei weist die Kühlvorrichtung eine Kühlplattenanordnung mit einem ersten Metallblech und einem zweiten Metallblech auf, welche mittels eines Walzplattierprozesses miteinander verbunden sind. Dabei sind das erste Metallblech und das zweite Metallblech unter Ausbildung von Kühlfluidkanälen, welche als Hohlräume zwischen den zwei Metallblechen ausgebildet sind, miteinander verbunden, wobei das erste Metallblech und das zweite Metallblech im Bereich der Kühlfluidkanäle voneinander beabstandet sind.

Die DE 10 2014 102 954 A1 offenbart eine Mikrokanal-Kühlrippe für ein Batteriemodul, welche eine eine Mehrzahl von Kühlkanälen definierende Metallplattenbaugruppe umfasst. Des Weiteren weist die Mikrokanal-Kühlrippe ein Einlassteil zum Einführen eines flüssigen Kühlmittels in die Mehrzahl von Kühlkanälen und ein Auslassteil, von dem das Kühlmittel die Mehrzahl von Kühlkanälen verlässt, auf.

Die DE 10 2012 023 316 A1 offenbart eine Temperiereinrichtung mit einem im Wesentlichen quaderförmigen Grundkörper, welcher mit Energiespeichereinheiten wärmeleitfähig verbindbar ausgebildet ist, und wenigstens einem Fluidkanal, welcher wenigstens abschnittsweise durch den Grundkörper geführt ist, um ein Temperierfluid zu führen. Des Weiteren weist die Temperiereinrichtung mehrere Vertiefungen und/oder Vorsprünge auf, welche an einer Mantelfläche des Grundkörpers angeordnet sind.

KR 2014 0026961 offenbart eine Temperiervorrichtung eines Batteriemoduls mit einem eine Vielzahl von Abstandselementen aufweisenden, abgeschlossenen Strömungsraum, wobei die Temperiervorrichtung eine innerhalb des Strömungsraumes angeordnete Stromumlenkungseinheit aufweist.

### Offenbarung der Erfindung

Das Batteriemodul mit der Temperiervorrichtung mit den Merkmalen des unabhängigen Anspruchs hat den Vorteil, dass ein durch einen Strömungsraum der Temperiervorrichtung strömendes Temperierfluid mittels einer innerhalb des Strömungsraumes angeordneten Stromumlenkungseinheit und einer Vielzahl an Abstandselementen derart geführt werden kann, dass eine gleichmäßigere Strömung des Temperierfluids bei einem reduzierten Druckverlust innerhalb des Strömungsraumes im Vergleich zu aus dem Stand der Technik bekannten Temperiervorrichtungen möglich ist und gleichzeitig auch das Auftreten von Totbereichen reduziert werden kann. Weiterhin hat eine erfindungsgemäße Temperiervorrichtung im Vergleich zu definierten Kühlkanälen ausbildenden Temperiervorrichtungen den Vorteil, dass aufgrund des größeren Strömungsraums die Temperiervorrichtung großflächiger von Temperierfluid durchströmbar ist und die im Strömungsraum angeordneten Abstandselemente für eine turbulentere Strömung mit einer höheren Reynoldszahl sorgen, wodurch die Wärmetransporteigenschaften weiter verbessert werden können und somit Wärme auch effizienter abführbar ist. Dadurch ist es möglich, Batteriezellen eines Batteriemoduls zuverlässig zu entwärmen.

Erfindungsgemäß wird eine Temperiervorrichtung eines Batteriemoduls zur Verfügung gestellt. Die Temperiervorrichtung weist einen im Wesentlichen abgeschlossenen Strömungsraum mit einer Vielzahl von Abstandselementen auf. Dabei sind die Abstandselemente innerhalb des Strömungsraumes angeordnet. Weiterhin weist die Temperiervorrichtung eine innerhalb des Strömungsraumes angeordnete Stromumlenkungseinheit auf. Dabei weist die Stromumlenkungseinheit ein erstes Ende und ein zweites Ende auf, wobei die Stromumlenkungseinheit eine entlang der Stromumlenkungseinheit von dem ersten Ende zu dem zweiten Ende verlaufende Längsrichtung aufweist. Weiterhin bildet die Stromumlenkungseinheit eine erste Seitenfläche und eine zweite Seitenfläche aus, welche entlang der Längsrichtung an sich einander gegenüberliegenden Seiten der Stromumlenkungseinheit angeordnet sind. Dabei sind die erste Seitenfläche und die zweite Seitenfläche zumindest abschnittsweise direkt benachbart zu einem Abstandselement angeordnet.

Durch die in den abhängigen Ansprüchen aufgeführten Maßnahmen sind vorteilhafte Weiterbildungen und Verbesserungen der im unabhängigen Anspruch angegebenen Vorrichtung oder des im unabhängigen Anspruch angegeben Verfahrens möglich.

Unter einem im Wesentlichen abgeschlossenen Strömungsraum soll verstanden sein, dass der Strömungsraum bis auf Anschlüsse zur Einleitung bzw. Ausleitung eines Temperierfluids in den Strömungsraum hinein bzw. aus dem Strömungsraum heraus fluiddicht abgeschlossen ist. Insbesondere ist der Strömungsraum für das Temperierfluid dicht abgeschlossen.

Es ist zweckmäßig, wenn die Temperiervorrichtung einen ersten Temperierkörper und einen zweiten Temperierkörper aufweist, welche jeweils im Wesentlichen aus einem planaren Grundkörper ausgebildet sind. Dabei weist der erste Temperierkörper eine erste Oberfläche und der zweite Temperierkörper eine zweite Oberfläche auf, die mittels der Vielzahl von Abstandselementen voneinander beabstandet sind. Dadurch bilden der erste Temperierkörper und der zweite Temperierkörper den Strömungsraum der Temperiervorrichtung aus. Mit anderen Worten ausgedrückt begrenzen die erste Oberfläche und die zweite Oberfläche den Strömungsraum. Insbesondere sind dabei die erste Oberfläche des ersten im Wesentlichen aus einem planaren Grundkörper ausgebildeten Temperierkörpers und die zweite Oberfläche des zweiten im Wesentlichen aus einem planaren Grundkörper ausgebildeten Temperierkörpers parallel zueinander angeordnet. Die Abstandselemente kontaktieren dabei bevorzugt jeweils die erste Oberfläche und/oder die zweite Oberfläche. Insbesondere sind die Abstandselemente dabei jeweils mit der ersten Oberfläche und/oder der zweiten Oberfläche verbunden.

Dies hat den Vorteil, dass durch die planare Ausbildung der zwei Temperierkörper keine den Druckverlust erhöhenden Strömungsumlenkungen bewirkenden Oberfläche ausgebildet werden und mittels der Anordnung von Abstandselementen in dem Strömungsraum dennoch eine definierte Strömungsführung mit erhöhten Turbulenzeigenschaften möglich ist. Weiterhin bietet die planare Ausbildung der Temperierkörper den Vorteil der Schaffung einer mechanisch stabilen Struktur während des Betriebes.

Unter einem im Wesentlichen planaren Grundkörper eines Temperierkörpers soll verstanden sein, dass der Temperierkörper ohne die daran kontaktierend angeordneten Abstandselemente und/oder ohne mit diesem verbundene Abstandselemente derart ausgebildet ist, dass die beiden größten sich einander gegenüberliegenden Seitenflächen des Grundkörpers eben ausgebildet sind. Insbesondere ist der Grundkörper als ebene Platte oder ebenes Blech ausgebildet. Insbesondere kann einer der Temperierkörper aber auch in Randbereichen abgerundet bzw. derartig ausgebildet sein, dass die beiden Temperierkörper den Strömungsraum abschließen können, wobei es aber auch möglich ist, den Strömungsraum durch zumindest eine weitere mit den beiden Temperierkörpern verbundene Gehäusewand abzuschließen.

Es ist weiterhin zweckmäßig, wenn der erste Temperierkörper und/oder der zweite Temperierkörper aus einem metallischen Werkstoff ausgebildet sind. Insbesondere ist der metallische Werkstoff Aluminium oder eine Aluminium enthaltende Legierung. Somit kann mit einem solchen Temperierkörper aufgrund der hohen thermischen Leitfähigkeit des metallischen Werkstoffs ein guter Wärmetransport durch den Temperierkörper erreicht werden, insbesondere ist eine gute Wärmeabfuhr aus an dem Temperierkörper angeordneten Batteriezellen eines Batteriemoduls möglich. Des Weiteren kann es auch zweckmäßig sein, die Temperiervorrichtung aus einem Kunststoff, insbesondere mit einer vorteilhaften thermischen Leitfähigkeit, auszubilden, um das Gewicht des Temperierkörpers zu reduzieren.

Von Vorteil ist es, dass gemäss der Erfindung der Strömungsraum einen ersten Bereich und einen zweiten Bereich ausbildet, wobei innerhalb des ersten Bereiches des Strömungsraumes und innerhalb des zweiten Bereiches des Strömungsraumes jeweils zumindest ein Abstandselement, bevorzugt eine Vielzahl an Abstandselementen, angeordnet ist. Dabei ist zwischen dem ersten Bereich und dem zweiten Bereich des Strömungsraumes ein erster Anschluss und ein zweiter Anschluss angeordnet. Der erste Anschluss ist dabei zum Einlassen von Temperierfluid in den Strömungsraum hinein ausgebildet. Der zweite Anschluss ist dabei zum Auslassen von Temperierfluid aus dem Temperierkörper heraus ausgebildet. Somit ist es möglich, Temperierfluid an einer derartigen Position des Strömungsraumes in diesen einzulassen und an einer derartigen Position des Strömungsraumes aus diesem auszulassen, dass eine gleichmäßigere Verteilung des Temperierfluids in dem gesamten Strömungsraum möglich ist, da der erste Anschluss und der zweite Anschluss zwischen dem ersten Bereich und dem zweiten Bereich angeordnet sind.

Von Vorteil kann es weiterhin sein, wenn der erste Anschluss benachbart zu der ersten Seitenfläche angeordnet ist und der zweite Anschluss benachbart zu der zweiten Seitenfläche angeordnet ist. Mit anderen Worten ausgedrückt bedeutet dies, dass der erste Anschluss und der zweite Anschluss zwischen dem ersten Bereich und dem zweiten Bereich angeordnet sind und weiterhin die Stromumlenkungseinheit zumindest teilweise zwischen dem ersten Anschluss und dem zweiten Anschluss verlaufend angeordnet ist. Somit kann dem Temperierfluid durch eine solche Anordnung des ersten Anschlusses und des zweiten Anschlusses eine den gesamten Strömungsraum erfassende Strömung auferlegt werden. Weiterhin können dadurch Totbereiche der Strömung, in denen die Strömungsgeschwindigkeit gegen null geht, reduziert werden oder sogar verhindert werden, da das Temperierfluid in dem ersten Bereich und dem zweiten Bereich des Strömungsraumes entlang der ersten Seitenfläche und entlang der zweiten Seitenfläche der Stromumlenkungseinheit strömt, um von dem ersten Anschluss zu dem zweiten Anschluss zu gelangen. Dabei wird die Strömung von den im Strömungsraum angeordneten und zu der ersten Seitenfläche und der zweiten Seitenfläche benachbarten Abstandselementen in der Art abgelenkt, dass alle Bereiche des Strömungsraumes von dem Temperierfluid gleichmäßiger durchströmt werden können.

Gemäß einem vorteilhaften Gedanken der Erfindung umfassen der erste Temperierkörper und/oder der zweite Temperierkörper die Vielzahl der Abstandselemente. Dabei ragen die Abstandselemente aus dem oben beschriebenen planaren Grundkörper des jeweiligen Temperierkörpers heraus, insbesondere ragen die Abstandselemente aus der ersten Oberfläche bzw. der zweiten Oberfläche heraus. Somit ist eine einfache Herstellung der Temperiervorrichtung möglich, da die Abstandselemente bereits an zumindest einem Temperierkörper angeordnet sind.

An dieser Stelle sei angemerkt, dass es möglich ist, die gesamte Vielzahl der Abstandselemente an nur einem Temperierkörper anzuordnen. Weiterhin ist es auch möglich, an dem ersten Temperierkörper und dem zweiten Temperierkörper Abstandselemente anzuordnen.

Dabei können die Abstandselemente unabhängig von dem Temperierkörper hergestellt werden und nach der Herstellung über einen geeigneten Fügeprozess mit dem planaren Grundkörpers des Temperierkörpers verbunden werden. Der Temperierkörper kann dabei die Abstandselemente umfassen, was insbesondere durch einen geeigneten Umformprozess eines planaren Grundkörpers des jeweiligen Temperierkörpers oder während dem Zusammenfügen der zwei Temperierkörpers, insbesondere mittels eines Walzplattierprozesses, möglich ist.

Bevorzugt sind die Abstandselemente in regelmäßigen Strukturen zueinander angeordnet. Dabei bilden drei direkt zueinander benachbarte Abstandselemente beispielweise jeweils ein gleichschenkliges Dreieck aus. An dieser Stelle sei angeführt, dass die ein solches gleichschenkliges Dreieck bildenden drei Eckpunkte jeweils die Flächenschwerpunkte einer Querschnittsfläche dreier benachbarter Abstandselemente sind, wobei die Querschnittsfläche parallel zu der ersten Oberfläche und/oder der zweiten Oberfläche des Grundkörpers des jeweiligen Temperierkörpers ist und alle drei Querschnittsflächen der Abstandselemente innerhalb derselben Ebene liegen. Dabei ist es bevorzugt, wenn eine kürzeste Seite des gleichschenkligen Dreiecks eine Länge zwischen 20 mm und 40 mm aufweist, wobei weiterhin bevorzugt eine Länge zwischen 25 mm und 30 mm ist. Insbesondere weist eine kürzeste Seite des gleichschenkligen Dreiecks eine Länge von 29 mm auf. Damit ist es möglich, dass die Abstandselemente durch die Anordnung in einer regelmäßigen Struktur neben der gewünschten Festlegung der Strömungsführung innerhalb des Strömungsraumes auch die mechanische Stabilität der Temperiervorrichtung vorteilhaft beeinflussen. Insbesondere ist es damit möglich, die Streckgrenze bevorzugt auf 2 % bis 10 %, weiterhin bevorzugt auf 3 % bis 7 % zu begrenzen. Insbesondere kann damit die Streckgrenze auf 4 % bis 6 % begrenzt werden. Damit weist die Temperiervorrichtung bei den auftretenden Temperaturschwankungen zwischen der Wärmeabfuhr während des Betriebes und einem abgekühlten Zustand in Ruhephasen eines Batteriemoduls eine hohe mechanische Stabilität auf, wodurch Verformungen auf einen zulässigen Wert begrenzt werden können.

Des Weiteren ist es bevorzugt, dass die innerhalb des Strömungsraumes angeordneten Abstandselemente in einer Ebene parallel zu der ersten Oberfläche und/oder der zweiten Oberfläche eine kreisförmige, quadratische, runde, ovale, elliptische oder rechteckige Querschnittsfläche aufweisen. Dabei weisen insbesondere kreisförmige Querschnittsflächen bevorzugt einen Durchmesser von 10 mm bis 20 mm und weiterhin bevorzugt einen Durchmesser von 15 mm bis 17 mm auf. Dadurch sind die innerhalb des Strömungsraumes angeordneten Abstandselemente in der Art ausgeführt, dass diese eine gewünschte Verteilung der Strömung des Temperierfluids innerhalb des Strömungsraumes ermöglichen und weiterhin für eine mechanische Stabilität der Temperiervorrichtung sorgen können.

Von Vorteil ist es, wenn die Temperiervorrichtung eine asymmetrische Form aufweist. Dabei soll unter einer asymmetrischen Form insbesondere verstanden sein, dass eine zu der ersten Oberfläche und/oder der zweiten Oberfläche des jeweiligen Temperierkörpers parallele Querschnittsfläche der Stromumlenkungseinheit eine asymmetrische Form aufweist. Weiterhin kann diese Querschnittsfläche in dem ersten Bereich und dem zweiten Bereich des Strömungsraumes eine unterschiedliche Form aufweisen, wobei die Querschnittsfläche in dem ersten Bereich und die Querschnittsfläche in dem zweiten Bereich insbesondere asymmetrisch zueinander ausgeführt sind. Weiterhin kann insbesondere die Querschnittsfläche in dem ersten Bereich und/oder in dem zweiten Bereich asymmetrisch ausgeführt sein, wobei darunter verstanden sein soll, dass die Querschnittsfläche in dem ersten Bereich und/oder in dem zweiten Bereich zumindest zwei geradlinig verlaufende Symmetrieachsen aufweist, die nicht parallel zueinander angeordnet sind.

Dabei ist es von Vorteil, wenn die eben beschriebene Querschnittsfläche in dem ersten Bereich einen ersten Abschnitt und einen zweiten Abschnitt aufweist, wobei der erste Abschnitt und der zweite Abschnitt L-förmig zueinander angeordnet sind, insbesondere L-förmig abgerundet zueinander angeordnet sind. Dabei ist unter L-förmig zueinander angeordnet zu verstehen, dass die Querschnittsfläche des ersten Bereiches im Wesentlichen eine erste Symmetrieachse aufweist und die Querschnittsfläche des zweiten Bereiches im Wesentlichen eine zweite Symmetrieachse aufweist, wobei die erste Symmetrieachse und die zweite Symmetrieachse rechtwinklig zueinander angeordnet sind. Dabei kann der Übergangsbereich zwischen dem ersten Bereich und dem zweiten Bereich der Querschnittsfläche abgerundet sein, so dass die Querschnittsfläche L-förmig abgerundet ausgebildet ist.

Des Weiteren ist es von Vorteil, wenn die eben beschriebene Querschnittsfläche in dem zweiten Bereich einen ersten Abschnitt aufweist, welcher I-förmig ausgeführt ist. Weiterhin kann es von Vorteil sein, wenn die Querschnittsfläche in dem zweiten Bereich einen zweiten Abschnitt aufweist, und der erste Abschnitt und der zweite Abschnitt T-förmig zueinander angeordnet sind. Dabei ist unter I-förmig ausgeführt zu verstehen, dass die Querschnittsfläche des ersten Bereiches im Wesentlichen eine Symmetrieachse aufweist. Unter T-förmig zueinander angeordnet zu sein, soll verstanden werden, dass die Querschnittsfläche des ersten Bereiches im Wesentlichen eine erste Symmetrieachse aufweist und die Querschnittsfläche des zweiten Bereiches im Wesentlichen eine zweite Symmetrieachse aufweist, wobei die erste Symmetrieachse und die zweite Symmetrieachse rechtwinklig zueinander angeordnet sind und die Symmetrieachse des ersten Bereiches die Querschnittsfläche des zweiten Bereiches mittig schneidet.

Gemäß einer Ausführungsform der Erfindung sind die erste Oberfläche des ersten Temperierelements und die zweite Oberfläche des zweiten Temperierelements durch einen Abstand voneinander beabstandet angeordnet. Dabei weist der Abstand bevorzugt einen Wert von 1 mm bis 5 mm, weiterhin bevorzugt einen Wert von 2 mm bis 3 mm auf. Insbesondere weist der Abstand ein Wert von 2,5 mm auf. Mittels eines Abstandes mit einem solchen Wert kann ein derartiger innerhalb des Strömungsraumes geführter Volumenstrom erreicht werden, welcher für eine ausreichende Wärmeabfuhr sorgen kann und gleichzeitig kann mit einem solchen Wert des Abstandes die Stabilität der Temperiervorrichtung aufrechterhalten bleiben.

Insbesondere ist es vorteilhaft, wenn eine von dem Strömungsraum abgewandte Oberfläche der Temperiervorrichtung eben ausgebildet ist. Insbesondere ist die von dem Strömungsraum abgewandte Oberfläche der Temperiervorrichtung eine Oberfläche des ersten Temperierkörpers oder des zweiten Temperierkörpers, welche der ersten Oberfläche bzw. der zweiten Oberfläche gegenüberliegend an dem planaren Grundkörper des jeweiligen Temperierkörpers angeordnet ist. Dies hat den Vorteil, dass an dieser Oberfläche, welche eben ausgebildet ist, Batteriezellen eines Batteriemoduls in der Art wärmeleitend angeordnet werden können, dass eine möglichst große durch den Kontakt der Batteriezellen mit der eben ausgebildeten Oberfläche ausgebildete Wärmeübertragungsfläche realisierbar ist und somit eine effiziente Wärmeabfuhr möglich ist.

Des Weiteren betrifft die Erfindung ein Batteriemodul mit einer oben beschriebenen Temperiervorrichtung, welche durch alle aufgezeigten Möglichkeiten weiterbildbar ist und dementsprechend auch alle genannten Vorteile aufweisen kann. Dabei ist an einer von dem Strömungsraum abgewandten Oberfläche der Temperiervorrichtung zumindest eine Batteriezelle des Batteriemoduls angeordnet.

Das erfindungsgemäße Batteriemodul ist für Batterien im mobilen Einsatz, insbesondere in Elektrofahrzeugen und E-Bikes, verwendbar und für Batterien für die Anwendung im stationären Betrieb.

Ferner wird auch ein Verfahren zur Herstellung eines Temperierkörpers, welcher bereits beschrieben ist, bereitgestellt. Dabei werden in einem ersten Schritt die Abstandselemente an zumindest einem der Temperierkörper angeordnet oder ein Temperierkörper wird in der Art ausgebildet, dass der Temperierkörper die Abstandselemente umfasst.

In einem zweiten Schritt wird die Stromumlenkungseinheit an einem der Temperierkörper angeordnet oder ein Temperierkörper wird in der Art ausgebildet, dass dieser die Stromumlenkungseinheit umfasst.

In einem dritten Schritt werden der erste Temperierkörper und zweite Temperierkörper unter Ausbildung eines im Wesentlichen abgeschlossen Strömungsraumes miteinander verbunden. Der Verbindungsprozess ist dabei insbesondere als Walzplattierprozess ausgeführt, wobei während des Walzplattierprozesses der Temperierkörper derart umgeformt wird, dass dieser die Abstandselemente und/oder die Stromumlenkungseinheit umfasst.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: schematisch einen senkrecht zu einer Längsrichtung der Stromumlenkungseinheit einer ersten erfindungsgemäßen Ausführungsform der Temperiervorrichtung angeordneten Querschnitt durch ein Batteriemodul,
- Figur 2: einen parallel zu einer Längsrichtung der Stromumlenkungseinheit angeordneten Querschnitt einer ersten erfindungsgemäßen Ausführungsform der Temperiervorrichtung,
- Figur 3: einen parallel zu einer Längsrichtung der Stromumlenkungseinheit angeordneten Querschnitt einer zweiten erfindungsgemäßen Ausführungsform der Temperiervorrichtung,
- Figur 4: einen parallel zu einer Längsrichtung der Stromumlenkungseinheit angeordneten Querschnitt einer dritten erfindungsgemäßen Ausführungsform der Temperiervorrichtung,
- Figur 5: einen zweiten Temperierkörper der Temperiervorrichtung in einer perspektivischen Ansicht,
- Figur 6: einen Anschluss der Temperiervorrichtung in einer ersten perspektivischen Ansicht und
- Figur 7: einen Anschluss der Temperiervorrichtung in einer zweiten perspektivischen Ansicht.

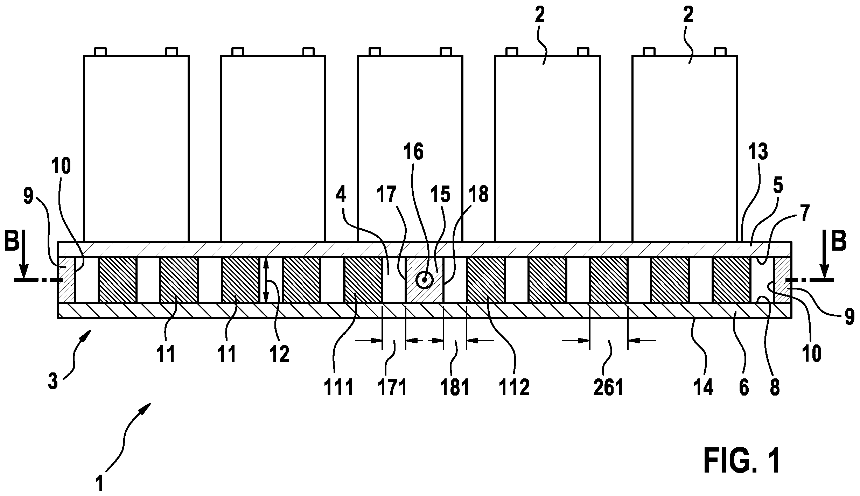

Die Figur 1 zeigt einen senkrecht zu einer Längsrichtung der Stromumlenkungseinheit einer ersten erfindungsgemäßen Ausführungsform der Temperiervorrichtung angeordneten Querschnitt durch ein Batteriemodul 1.

Das Batteriemodul 1 weist eine Mehrzahl an Batteriezellen 2 auf, wobei das in der Figur 1 gezeigte Batteriemodul 1 insbesondere fünf Batteriezellen 2 aufweist. Weiterhin weist das Batteriemodul 1 eine erfindungsgemäße Temperiervorrichtung 3 auf. Dabei sind die Batteriezellen 2 an der Temperiervorrichtung 3 angeordnet, wobei die Batteriezellen 2 insbesondere in der Art an der Temperiervorrichtung 3 angeordnet sind, dass Wärme von den Batteriezellen 2 mittels der Temperiervorrichtung 3 aus den Batteriezellen 2 abgeführt werden kann.

Die Temperiervorrichtung 3 weist einen im Wesentlichen abgeschlossenen Strömungsraum 4 auf. Die in der Figur 1 gezeigte erste Ausführungsform einer erfindungsgemäßen Temperiervorrichtung 3 weist einen ersten Temperierkörper 5 und einen zweiten Temperierkörper 6 auf. Dabei weist der erste Temperierkörper 5 eine erste Oberfläche 7 auf. Dabei weist der zweite Temperierkörper 6 eine zweite Oberfläche 8 auf. Weiterhin weist die Temperiervorrichtung 3 weitere Gehäusewände 9 mit inneren Oberflächen 10 auf. Der erste Temperierkörper 5, der zweite Temperierkörper 6 und die weiteren Gehäusewände 9 bilden bei dem in der Figur 1 gezeigten ersten Ausführungsbeispiel der Temperiervorrichtung 3 den Strömungsraum 4 aus. Insbesondere begrenzen die erste Oberfläche 7, die zweite Oberfläche 8 und die inneren Oberflächen 10 den Strömungsraum 4 der Temperiervorrichtung 3. Der Strömungsraum 4 ist somit durch den ersten Temperierkörper 5, den zweiten Temperierkörper 6 und die weiteren Gehäusewände 9 im Wesentlichen abgeschlossen, insbesondere im Wesentlichen fluiddicht abgeschlossen. Des Weiteren sind insbesondere die erste Oberfläche 7 und die zweite Oberfläche 8 parallel zueinander angeordnet. Dabei weist der Strömungsraum 4, wie später noch beschrieben ist, Anschlüsse zum Einlassen bzw. Auslassen von Temperierfluid in den Strömungsraum 4 auf, so dass er im Wesentlichen fluiddicht abgeschlossen ist.

Des Weiteren ist aus der Figur 1 zu erkennen, dass der erste Temperierkörper 5 und der zweite Temperierkörper 6 im Wesentlichen aus einem planaren Grundkörper ausgebildet sind. Dabei sind insbesondere die der ersten Oberfläche 7 gegenüberliegende Seitenfläche 13 und die Oberfläche 7 eben ausgebildet, wobei die erste Oberfläche 7 und die Seitenfläche 13 insbesondere parallel zueinander sind. Weiterhin sind insbesondere die der zweiten Oberfläche 8 gegenüberliegende Seitenfläche 14 und die Oberfläche 8 eben ausgebildet, wobei die zweite Oberfläche 8 und die Seitenfläche 14 insbesondere parallel zueinander angeordnet sind.

Die Temperiervorrichtung 3 weist weiterhin eine Vielzahl von Abstandselementen 11 auf, welche innerhalb des Strömungsraumes 4 angeordnet sind. Die erste Oberfläche 7 des ersten Temperierkörpers 5 und die zweite Oberfläche 8 des zweiten Temperierkörpers 6 sind mittels der Vielzahl von Abstandselementen 11 durch einen Abstand 12 voneinander beabstandet. Dabei kontaktieren die Abstandselemente 11 jeweils die erste Oberfläche 7 und die zweite Oberfläche 8. Weiterhin ist es auch denkbar, dass die Abstandselemente 11 jeweils mit der ersten Oberfläche 7 und/oder der zweiten Oberfläche 8 verbunden sind.

Des Weiteren kann ein Abstandselement 11 auch mit nur einer Oberfläche 7 bzw. 8 verbunden sein.

Die Temperiervorrichtung 3 weist eine Stromumlenkungseinheit 15 auf, welche innerhalb des Strömungsraumes 4 angeordnet ist. Die Stromumlenkungseinheit 15 weist eine entlang der Stromumlenkungseinheit 15 verlaufende Längsrichtung 16 auf, welche in der Figur 1 senkrecht auf der Zeichenebene steht. Mit anderen Worten ausgedrückt bedeutet dies, dass der in der Figur 1 gezeigte Querschnitt des Batteriemoduls 1 senkrecht zu der Längsrichtung 16 der Stromumlenkungseinheit 15 ist.

Weiterhin bildet die innerhalb des Strömungsraumes 4 angeordnete Stromumlenkungseinheit 15 eine erste Seitenfläche 17 und eine zweite Seitenfläche 18 aus. Die erste Seitenfläche 17 und die zweite Seitenfläche 18 sind an sich einander gegenüberliegenden Seiten der Stromumlenkungseinheit 15 angeordnet. Insbesondere sind die erste Seitenfläche 17 und die zweite Seitenfläche 18 entlang der Längsrichtung 16 an sich einander gegenüberliegenden Seiten der Stromumlenkungseinheit 15 angeordnet. Insbesondere sind bei dem in der Figur 1 gezeigten Ausführungsbeispiel der Temperiervorrichtung 3 die sich einander gegenüberliegenden Seitenflächen 17 und 18 senkrecht zu der ersten Oberfläche 7 und der zweiten Oberfläche 8 angeordnet.

Die erste Seitenfläche 17 ist dabei zu einem ersten Abstandselement 111 direkt benachbart angeordnet. Des Weiteren ist die zweite Seitenfläche 18 direkt benachbart zu einem zweiten Abstandselement 112 angeordnet. Wie aus der Figur 1 zu erkennen ist, soll unter direkt benachbart verstanden sein, dass das jeweilige Abstandselement 111 bzw. 112 auf derselben Seite der Längsrichtung 16 angeordnet ist wie die erste Seitenfläche 17 bzw. die zweite Seitenfläche 18. Mit anderen Worten ausgedrückt bedeutet dies, dass zwischen dem ersten Abstandselement 111, welches zu der ersten Seitenfläche 17 direkt benachbart ist, und dem zweiten Abstandelement 112, welches zu der zweiten Seitenfläche 18 direkt benachbart ist, die Stromumlenkungseinheit 15 angeordnet ist.

Der aus Figur 1 ersichtliche Abstand 171 zwischen der ersten Seitenfläche 17 und einem zu der ersten Seitenfläche 17 direkt benachbarten ersten Abstandselement 111 weist bevorzugt einen Wert von 5 mm bis 25 mm, weiterhin bevorzugt einen Wert von 10 mm bis 20 mm auf. Insbesondere weist der Abstand 171 einen Wert von 15 mm auf.

Der aus Figur 1 ersichtliche Abstand 181 zwischen der zweiten Seitenfläche 18 und einem zu der zweiten Seitenfläche 18 direkt benachbarten zweiten Abstandselement 112 weist bevorzugt einen Wert von 5 mm bis 25 mm, weiterhin bevorzugt einen Wert von 10 mm bis 20 mm auf. Insbesondere weist der Abstand 181 einen Wert von 15 mm auf.

Insbesondere weist das Verhältnis der Querschnittsfläche des Strömungsraums 4, welcher von Temperierfluid durchströmt werden kann, und in der Figur 1 gezeigt ist, zu der Summe aller Querschnittsflächen aller Abstandelemente 11, die innerhalb eines Schnitts liegen, bei einem Schnitt durch deren Schwerpunkt, wie in Figur 1 gezeigt ist, einen Wert bevorzugt zwischen 0,75 und 1,25 weiterhin bevorzugt einen Wert zwischen 0,85 und 1,15. Insbesondere weist das Verhältnis einen Wert von 1 auf. Somit kann eine gleichmäßigere Durchströmung des Strömungsraums 4 bei einem geringen Druckverlust ermöglicht werden.

Weiterhin ist aus der Figur 1 zu erkennen, dass die von dem Strömungsraum 4 abgewandte Oberfläche, welche auch als Seitenfläche 13 bezeichnet ist, eben ausgebildet ist. An der Oberfläche bzw. Seitenfläche 13 sind die Batteriezellen 2 des Batteriemoduls 1 angeordnet. Dabei sind die Batteriezellen 2 bevorzugt in der Art angeordnet, dass die Batteriezellen 2 wärmeleitend mit der Temperiervorrichtung 3, insbesondere dem Temperierkörper 5, verbunden sind.

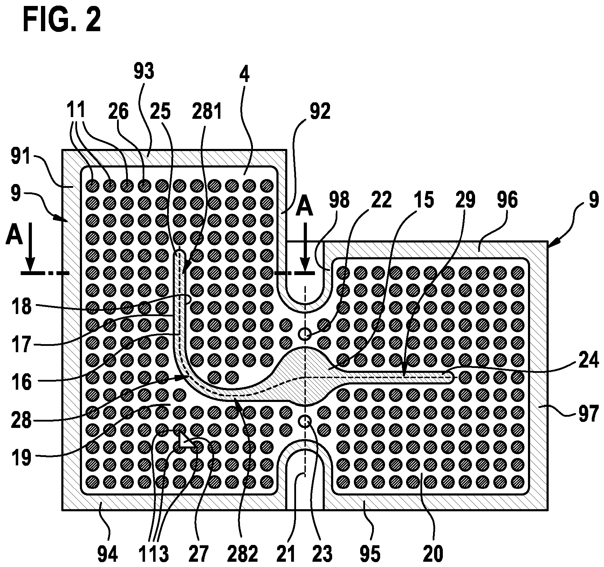

Die Figur 2 zeigt einen parallel zu einer Längsrichtung der Stromumlenkungseinheit angeordneten Querschnitt der ersten erfindungsgemäßen Ausführungsform der Temperiervorrichtung 3. Dabei ist die gezeigte Querschnittsfläche insbesondere auch parallel zu der ersten Oberfläche 7 bzw. der zweiten Oberfläche 8 angeordnet.

Zunächst sei an dieser Stelle darauf hingewiesen, dass die Figur 1 einen Querschnitt durch das Batteriemodul 1 und insbesondere die Temperiervorrichtung 3 gemäß dem in Figur 2 gezeigten Schnitt A-A zeigt. Die Figur 2 zeigt einen Querschnitt durch die Temperiervorrichtung 3 gemäß dem Schnitt B-B aus Figur 1. Da die Figur 2 einen Querschnitt durch den Strömungsraum 4 zeigt, sind der erste Temperierkörper 5 und der zweite Temperierkörper 6 hier nicht zu erkennen, wobei die weiteren Gehäusewände 9 in der Figur 2 zu erkennen sind.

Weiterhin sind in der Figur 2 die Abstandselemente 11, welche innerhalb des Strömungsraumes 4, der von einem Temperierfluid durchströmbar ist, angeordnet sind und die Stromumlenkungseinheit 15 zu erkennen.

Die Temperiervorrichtung 3 bildet einen ersten Bereich 19 und einen zweiten Bereich 20 aus. Die Figur 2 zeigt, dass sowohl in dem ersten Bereich 19 als auch in dem zweiten Bereich 20 eine Vielzahl an Abstandselementen 11 angeordnet sind. Der erste Bereich 19 des Strömungsraumes 4 und der zweite Bereich 20 des Strömungsraumes 4 sind beispielsweise durch die gestrichelt eingezeichnete Linie 21 voneinander abgegrenzt, wobei diese Linie 21 nur einer Verdeutlichung der Abgrenzung des ersten Bereiches 19 und des zweiten Bereiches 20 voneinander dienen soll und keine physikalische Trennung ausbildet.

Zwischen dem ersten Bereich 19 und dem zweiten Bereich 20 ist ein erster Anschluss 22 angeordnet, welcher zum Einlassen von Temperierfluid in den Strömungsraum 4 hinein dient. Zwischen dem ersten Bereich 19 und dem zweiten Bereich 20 ist ein zweiter Anschluss 23 angeordnet, welcher zum Ausströmen von Temperierfluid aus dem Strömungsraum 4 heraus dient. Unter einer Anordnung zwischen dem ersten Bereich 19 und dem zweiten Bereich 20 kann, wie aus der Figur 2 ersichtlich ist, verstanden sein, dass die den ersten Bereich 19 und den zweiten Bereich 20 abgrenzende Trennlinie 21 durch den jeweiligen Anschluss 22 bzw. 23 verlaufend ist.

Weiterhin zeigt die Figur 2 die Längsrichtung 16 der Stromumlenkungseinheit 15, welche gepunktet eingezeichnet ist, sowie die erste Seitenfläche 17 und die zweite Seitenfläche 18. Dabei ist aus der Figur 2 zu erkennen, dass die Stromumlenkungseinheit 15 ein erstes Ende 24 und ein zweites Ende 25 aufweist, wobei die Längsrichtung 16 von dem ersten Ende 24 zu dem zweiten Ende 25 entlang der Stromumlenkungseinheit 15 verläuft. Weiterhin ist aus der Figur 2 zu erkennen, dass der erste Anschluss 22 direkt benachbart zu der zweiten Seitenfläche 18 und der zweite Anschluss 23 direkt benachbart zu der ersten Seitenfläche 17 angeordnet ist, sodass die Stromumlenkungseinheit 15 zwischen dem ersten Anschluss 22 und dem zweiten Anschluss 23 verlaufend angeordnet ist.

Des Weiteren zeigt die Figur 2, dass die Stromumlenkungseinheit 15 entlang der Längsrichtung 16 in dem Übergangsbereich zwischen dem ersten Bereich 19 und dem zweiten Bereich 20 eine Vergrößerung einer senkrecht zu der Längsrichtung 16 angeordneten Querschnittsfläche aufweist, um insbesondere dass einströmende Temperierfluid gleichmäßiger auf den ersten Bereich 19 und den zweiten Bereich 20 zu verteilen und insbesondere das ausströmende Temperierfluid besser ausleiten zu können.

Die gezeigten Abstandselemente 11 weisen kreisförmige Querschnittsflächen 26 auf, wobei die in der Figur 2 gezeigten Abstandselemente 11 insbesondere jeweils eine Querschnittsfläche 26 aufweisen mit einem Durchmesser von 15 mm, wobei zu einer Verdeutlichung der Durchmesser in Figur 1 mit dem Bezugszeichen 261 bezeichnet ist.

Weiterhin zeigt die Figur 2, dass die Abstandselemente 11 in regelmäßigen Strukturen zueinander angeordnet sind. Dabei bilden drei direkt zueinander benachbarte Abstandselemente 113 ein gleichschenkliges Dreieck 27 aus, welches bei dem in der Figur 2 gezeigten ersten Ausführungsbeispiel der Temperiervorrichtung 3 auch ein gleichseitiges Dreieck 27 ist. Dabei weist die kürzeste Seite dieses Dreiecks 27 eine Länge von 29 mm auf.

Die Stromumlenkungseinheit 15 weist eine asymmetrische Form auf. Insbesondere ist die Querschnittsfläche 28 in dem ersten Bereich 19 des Strömungsraumes 4 asymmetrisch zu der Querschnittsfläche 29 in dem zweiten Bereich 20 des Strömungsraumes 4.

Die Querschnittsfläche 28 in dem ersten Bereich 19 weist eine asymmetrische Form auf. Insbesondere weist die Querschnittsfläche 28 einen ersten Abschnitt 281 und einen zweiten Abschnitt 282 auf, welche im Wesentlichen L-förmig zueinander angeordnet sind. Dabei ist der Übergangsbereich zwischen dem ersten Abschnitt 281 von dem zweiten Abschnitt 282 abgerundet ausgebildet.

Die Querschnittsfläche 29 in dem zweiten Bereich 20 weist eine symmetrische Form auf. Insbesondere ist die Querschnittsflächen 29 I-förmig ausgebildet, wobei die Querschnittsfläche symmetrisch insbesondere zu der gezeigten Längsrichtung 16 ist.

Insbesondere ist aus der Figur 2 zu erkennen, dass in dem ersten Abschnitt 281 zwischen der ersten Seitenfläche 17 der Stromumlenkungseinheit 15 und einer ersten Seitenwand 91 auf der kürzesten Verbindung jeweils höchstens fünf Abstandselemente 11 angeordnet sind. Insbesondere sind in dem ersten Abschnitt 281 zwischen der zweiten Seitenfläche 18 der Stromumlenkungseinheit 15 und einer zweiten Gehäusewand 92 auf der kürzesten Verbindung jeweils höchstens fünf Abstandselemente 11 angeordnet. Des Weiteren sind zwischen dem zweiten Ende 25 und einer dritten Gehäusewand 93 entlang der kürzesten Verbindung zwischen dem zweiten Ende 25 und der dritten Gehäusewand 93 vier Abstandselemente 11 angeordnet.

Insbesondere ist aus der Figur 2 zu erkennen, dass in dem zweiten Abschnitt 282 zwischen der ersten Seitenfläche 17 und einer vierten Gehäusewand 94 auf der kürzesten Verbindung jeweils höchstens fünf Abstandselemente 11 angeordnet sind.

Weiterhin ist aus der Figur 2 insbesondere zu erkennen, dass in dem zweiten Bereich des Strömungsraumes 4 zwischen der ersten Seitenfläche 17 der Stromumlenkungseinheit 15 und einer fünften Gehäusewand 95 jeweils höchstens sechs Abstandselemente 11 angeordnet sind. Weiterhin ist insbesonders der Figur 2 zu erkennen, dass in dem zweiten Bereich des Strömungsraumes 4 zwischen der zweiten Seitenfläche 18 und einer sechsten Gehäusewand 96 auf der kürzesten Verbindung jeweils höchstens sechs Abstandselemente 11 angeordnet sind.

Insbesondere ist aus der Figur 2 auch zu erkennen, dass in dem zweiten Bereich des Strömungsraumes 4 zwischen dem ersten Ende 24 und einer siebten Gehäusewand 97 entlang der kürzesten Verbindung zwischen dem ersten Ende 24 und der siebten Gehäusewand 97 vier Abstandselemente 11 angeordnet sind.

An dieser Stelle sei angemerkt, dass bei der insbesondere in den vier vorherigen Absätzen gewählten Formulierung "zwischen" stets eine kürzeste Verbindung zwischen der Stromumlenkungseinheit 15 und einer Gehäusewand 9 gemeint ist.

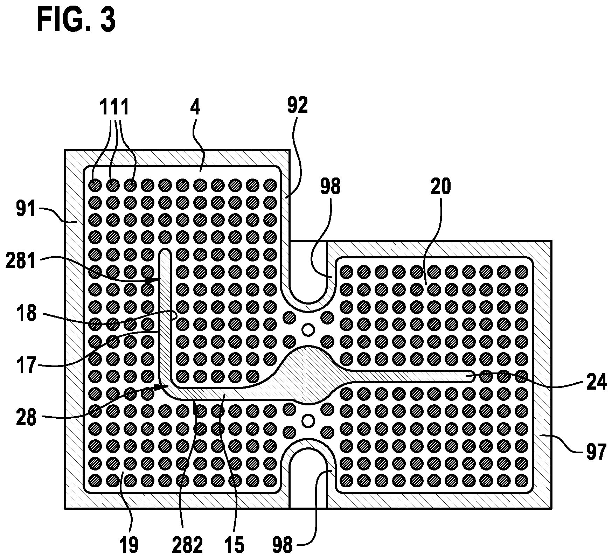

Die Figur 3 zeigt einen parallel zu einer Längsrichtung der Stromumlenkungseinheit angeordneten Querschnitt einer zweiten erfindungsgemäßen Ausführungsform der Temperiervorrichtung 3.

Die in der Figur 3 gezeigte Temperiervorrichtung 3 gemäß einer zweiten Ausführungsform unterscheidet sich von der in der Figur 2 gezeigten Temperiervorrichtung 3 in der Ausbildung des ersten Bereiches 19 des Strömungsraumes 4 und des zweiten Bereiches 20 des Strömungsraumes 4.

Die Querschnittsfläche 28 in dem ersten Bereich 19 weist weiterhin eine asymmetrische Form auf. Der erste Abschnitt 281 und der zweite Abschnitt 282 sind L-förmig zueinander angeordnet, wobei der Übergangsbereich zwischen dem ersten Abschnitt 281 zweiten Abschnitt 282 im Unterschied zu dem in der Figur 2 gezeigten ersten Ausführungsbeispiel nicht abgerundet ist.

Weiterhin unterscheidet sich die zweite Ausführungsform einer erfindungsgemä-βen Temperiervorrichtung von der ersten Ausführungsform dadurch, dass zwischen der ersten Seitenfläche 17 der Stromumlenkungseinheit 15 in dem ersten Abschnitt 281 und der ersten Gehäusewand 91 auf der kürzesten Verbindung jeweils höchstens vier Abstandselemente 11 angeordnet sind und weiterhin zwischen der zweiten Seitenfläche 18 der Stromumlenkungseinheit 15 in dem ersten Abschnitt 281 und der zweiten Gehäusewand 92 auf der kürzesten Verbindung jeweils höchstens sechs Abstandselemente 11 angeordnet sind.

An dieser Stelle sei angemerkt, dass aufgrund des nicht abgerundet ausgebildeten Übergangsbereiches zwischen dem ersten Abschnitt 281 und dem zweiten Abschnitt 282 die Anzahl der direkt zu der ersten Seitenfläche 17 bzw. der zweiten Seitenfläche 18 der Stromumlenkungseinheit 15 benachbarten Abstandselemente 11 verändert ist im Vergleich zu dem ersten Ausführungsbeispiel.

In dem zweiten Bereich 20 des Strömungsraumes 4 unterscheidet sich die der Figur 3 gezeigte zweite Ausführungsform von der ersten Ausführung von dadurch, dass zwischen dem ersten Ende 24 und der siebten Gehäusewand 97 nur drei Abstandselemente 11 anstatt vier Abstandselementen 11 angeordnet sind.

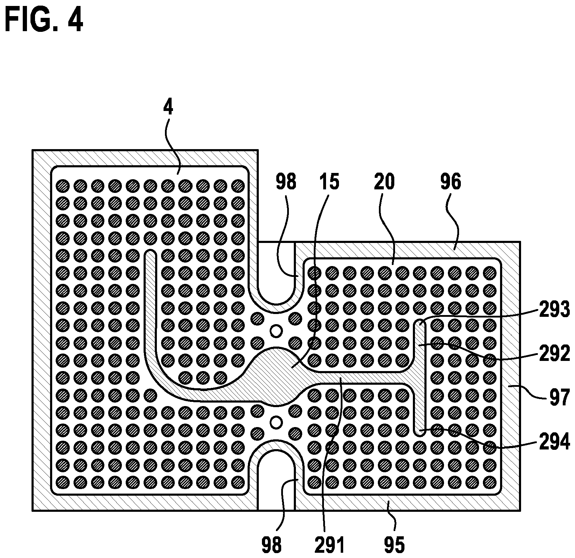

Die Figur 4 zeigt einen parallel zu einer Längsrichtung der Stromumlenkungseinheit angeordneten Querschnitt einer dritten erfindungsgemäßen Ausführungsform der Temperiervorrichtung 3.

Die in der Figur 4 gezeigte dritte Ausführungsform einer erfindungsgemäßen Temperiervorrichtung 3 unterscheidet sich von der ersten Ausführungsform, welche in der Figur 2 gezeigt ist, in der Ausbildung des zweiten Bereiches 20 des Strömungsraumes 4.

Die Stromumlenkungseinheit 15 ist dabei T-förmig ausgebildet. Die Stromumlenkungseinheit 15 weist in dem zweiten Bereich 20 einen ersten Abschnitt 291 und einen zweiten Abschnitt 292 auf. Der zweite Abschnitt 292 weist ein erstes Ende 293 und ein zweites Ende 294 auf. Die Stromumlenkungseinheit 15 ist dabei derart ausgebildet, dass die Symmetrieachse des ersten Abschnitts 291 und die Symmetrieachse des zweiten Abschnitts 292 senkrecht zueinander angeordnet sind, wobei die Symmetrieachse des ersten Abschnitts 291 die Symmetrieachse des zweiten Abschnittes 292 zwischen dem ersten Ende 293 und dem zweiten Ende 294 schneidet.

Insbesondere sind zwischen dem zweiten Abschnitt 292 und der siebten Gehäusewand 97 auf der kürzesten Verbindung jeweils höchstens vier Abstandselemente 11 angeordnet. Weiterhin sind zwischen dem ersten Ende 293 und der sechsten Gehäusewand 96 auf der kürzesten Verbindung jeweils höchstens drei Abstandselemente 11 angeordnet. Weiterhin sind zwischen dem zweiten Ende 294 und der fünften Gehäusewand 95 auf der kürzesten Verbindung jeweils höchstens drei Abstandelemente 11 angeordnet.

Den in den Figuren 2 bis 4 gezeigten Ausführungsformen ist gemein, dass zwischen der ersten Gehäusewand 91 und der zweiten Gehäusewand 92 auf der kürzesten Verbindung jeweils höchstens elf Abstandselemente 11 angeordnet sind. Weiterhin sind zwischen der dritten Gehäusewand 93 und der vierten Gehäusewand 94 auf der kürzesten Verbindung jeweils höchstens achtzehn Abstandselemente 11 angeordnet. Weiterhin sind zwischen der fünften Gehäusewand 95 und das sechsten Gehäusewand 96 auf der kürzesten Verbindung jeweils höchstens dreizehn Abstandselemente 11 angeordnet. Zwischen der siebten Gehäusewand 97 und einer achten Gehäusewand 98 sind auf der kürzesten Verbindung jeweils höchstens elf Abstandselemente 11 angeordnet. Dabei wird diese höchste Anzahl der Anordnung von Abstandselementen 11 zwischen zwei Gehäusewänden 9 dann erreicht, wenn die Stromumlenkungseinheit 15 nicht zwischen den jeweiligen Gehäusewand 9 verlaufend angeordnet ist.

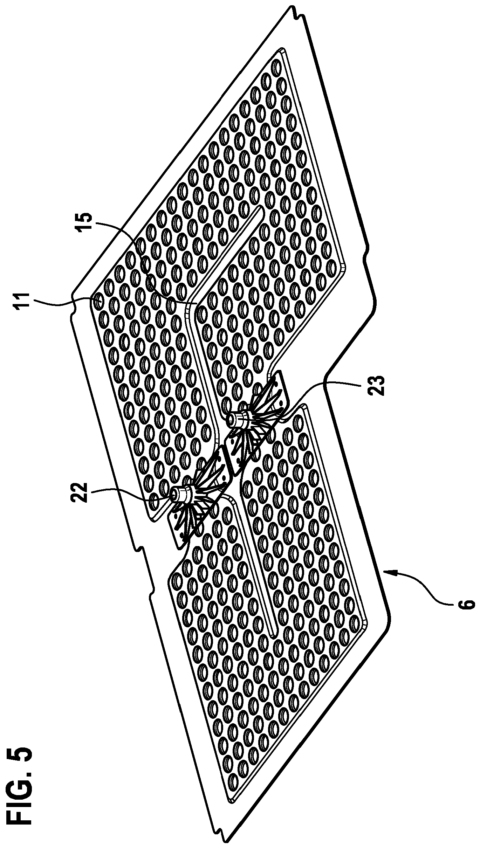

Die Figur 5 zeigt einen zweiten Temperierkörper 6 in einer perspektivischen Ansicht, wobei die von dem Strömungsraum 4 der Temperiervorrichtung 3 abgewandte Seite zu erkennen ist.

Dabei ist der Temperierkörper 6 der Art ausgebildet, dass dieser die Abstandselemente 11 und die Stromumlenkungseinheit 15 umfasst. Die Abstandselemente 11 die Stromumlenkungseinheit 15 ragen dabei aus der Ebene des Grundkörpers heraus und sind somit innerhalb des Strömungsraums 4 angeordnet. Aufgrund dieser Ausbildung sind die Abstandselemente 11 und die Stromumlenkungseinheit 15 als Vertiefungen an dem zweiten Temperierkörper 6 zu erkennen. Eine solche Ausbildung kann beispielweise mittels eines Walzplattierprozesses erreicht werden.

Weiterhin zeigt die Figur 5 den ersten Anschluss 22 und den zweiten Anschluss 23, welche zum Einlassen respektive Auslassen von Temperierfluid in den Strömungsraum 4 dienen und auf der von dem Strömungsraum 4 abgewandten Seite des zweiten Temperierkörpers 6 angeordnet sind.

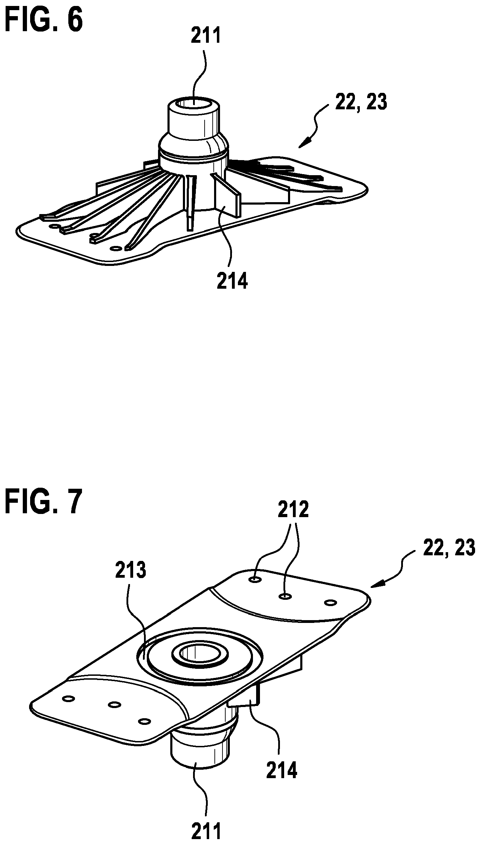

Die Figur 6 und die Figur 7 zeigen den ersten Anschluss 22 bzw. den zweiten Anschluss 23 in einer ersten perspektivischen Ansicht und einer zweiten perspektivischen Ansicht. Dabei bilden der erste Anschluss 22 bzw. der zweite Anschluss 23 ein Anschlusselement 211 aus, welches an eine das Temperierfluid führende und in den Figuren 6 und 7 nicht gezeigte Leitung anschließbar ist.

Des Weiteren weist der erste Anschluss 22 bzw. der zweite Anschluss 23 Mittel 212 auf, welche dazu eingereicht sind, den jeweiligen Anschluss 21, 22 mit dem zweiten Temperierkörper 6 zu verbinden. Weiterhin weist der Anschluss 21, 22 zumindest eine Vertiefung 213 auf, in welcher eine nicht gezeigte Dichtung angeordnet werden kann.

Weiterhin weist der Anschluss 22, 23 sternförmig angeordnete Rippen 214 auf, welche die mechanische Stabilität erhöhen.

Während es vorteilhaft ist, den ersten Temperierkörper 5 und den zweiten Temperierkörper 6, insbesondere unter Ausbildung der Abstandselemente 11 und/oder der Stromumlenkungseinheit 12 mittels eines Walzplattierprozesses mit einander zu verbinden, ist es vorteilhaft den ersten Anschluss 22 und den zweiten Anschluss 23 mittels Laserschweißen in dem zweiten Temperierkörper 6 anzubinden.

### Bevorzugte Ausführungsformen

Bei einer bevorzugten Ausführungsform der erfindungsgemäßen Temperiervorrichtung 3, welche insbesondere in den Figuren 2 bis 4 gezeigt sind, weisen die Abstandselemente 11 vorteilhaft einen Durchmesser 261 von 15 mm oder 16 mm auf, die gleichschenkligen Dreiecke 27 vorteilhaft eine kürzeste Seite von 29 mm oder 30 mm und die erste Oberfläche 7 sowie die zweite Oberfläche 8 vorteilhaft einen Abstand 12 von 2 mm oder 2,5 mm auf. Für diese aufgezeigten Möglichkeiten konnten die numerisch bestimmten Druckverluste einer erfindungsgemä-βen Temperiervorrichtung 3 bei einer Durchströmung des Strömungsraumes 4 von dem ersten Anschluss 21 zu dem zweiten Anschluss 23 mit einem Temperierfluid bei einem Volumenstrom von 500 l/h oder 1200 l/h reduziert werden und die Strömung des Temperierfluid gleichmäßig verteilt werden, wobei gleichzeitig die Temperiervorrichtung 3 eine ausreichende mechanische Stabilität gegenüber den auftretenden Belastung aufweist.

Insbesondere eine Temperiervorrichtung 3 gemäß der in der Figur 2 gezeigten ersten Ausführungsform mit einem Durchmesser 261 von 16 mm, mit einer kürzesten Seite des gleichschenkligen Dreiecks 27 von 30 mm und mit einem Abstand 12 von 2 mm zeigte insgesamt den geringsten Druckverlust und die beste Verteilung des strömenden Temperierfluids innerhalb des Strömungsraumes 4 im Vergleich aller simulierten Strömungsräume 4.

Weiterhin konnten bei einer Temperiervorrichtung 3 gemäß der in der Figur 3 gezeigten zweiten Ausführungsform mit einem Durchmesser 261 von 16 mm, mit einer kürzesten Seite des gleichschenkligen Dreiecks 27 von 30 mm und mit einem Abstand 12 von 2 mm die Wärmeabfuhr aus dem Strömungsraum 4 optimiert werden.

## Patentansprüche

1. Batteriemodul mit einer Temperiervorrichtung
mit einem eine Vielzahl von Abstandselementen (11) aufweisenden, im Wesentlichen abgeschlossenen Strömungsraum (4), wobei die Abstandselemente (11) innerhalb des Strömungsraumes (4) angeordnet sind, und
die Temperiervorrichtung (3) weiterhin eine innerhalb des Strömungsraumes (4) angeordnete Stromumlenkungseinheit (15) aufweist mit einer entlang der Stromumlenkungseinheit (15) von einem ersten Ende (24) zu einem zweiten Ende (25) der Stromumienkungseinheit (15) verlaufenden Längsrichtung (16), wobei
die Stromumtenkungseinheit (15) eine erste Seitenfläche (17) und zweite Seitenfläche (18) ausbildet, welche
entlang der Längsrichtung (16) an sich einander gegenüberliegen Seiten der Stromlenkungseinheit (15) angeordnet sind, wobei die erste Seitenfläche (17) und die zweite Seitenfläche (18) zumindest abschnittsweise direkt benachbart zu einem Abstandelement (11, 111, 112) angeordnet sind, wobei der Strömungsraum (4) einen ersten Bereich (19) und einen zweiten Bereich (20) ausbildet,
in welchen jeweils Abstandelemente (11) angeordnet sind, wobei zwischen dem ersten Bereich (19) und dem zweiten Bereich (20) des Strömungsraumes (4)
ein zum Einlassen von Temperierfluid in den Strömungsraum (4) ausgebildeter erster Anschluss (22) und ein zum Auslassen von Temperierfluid aus dem Strömungsraums (4) ausgebildeter zweiter Anschluss (23) angeordnet ist, **dadurch gekennzeichnet, dass**
an einer von dem Strömungsraum (4) abgewandten Oberfläche (13) der Temperiervorrichtung (3) zumindest eine Batteriezelle (2) angeordnet ist.

2. Batteriemodul nach Anspruch 1,
mit einem ersten Temperierkörper (5) mit einer ersten Oberfläche (7) und einem zweiten Temperierkörper (6) mit einer zweiten Oberfläche (8), welche jeweils im Wesentlichen aus einem planaren Grundkörper ausgebildet sind, wobei
die erste Oberfläche (7) und die zweite Oberfläche (8) der Temperierkörper (5,6) mittels der Vielzahl von Abstandselementen (11) unter Ausbildung des Strömungsraumes (4) voneinander beabstandet sind, insbesondere parallel zu einander angeordnet sind, wobei
die Abstandselemente (11) jeweils die erste Oberfläche (7) und/oder die zweite Oberfläche (8) kontaktieren, insbesondere jeweils mit der ersten Oberfläche (7) und/oder der zweiten Oberfläche (8) verbunden sind.

3. Batteriemodul nach Anspruch 2, **dadurch gekennzeichnet, dass** der erste Temperierkörper (5) und/oder der zweite Temperierkörper (6) aus einem metallischen Werkstoff, insbesondere aus Aluminium, oder aus Kunststoff ausgebildet sind.

4. Batteriemodul nach einem der Ansprüche 2 bis 3, **dadurch gekennzeichnet, dass**
der erste Temperierkörper (5) und/oder der zweite Temperierkörper (6) die Vielzahl der Abstandselemente (11) umfassen, wobei die Abstandselemente (11) jeweils aus der Ebene des planaren Grundkörpers des Temperierkörpers (5,6) herausragen.

5. Batteriemodul nach einem der vorhergehenden Ansprüche, **dadurch gekennzeichnet, dass**
die Abstandselemente (11) in regelmäßigen Strukturen zueinander angeordnet sind, und
drei direkt zueinander benachbarte Abstandselemente (11) jeweils ein gleichschenkliges Dreieck (27) bilden, wobei
eine kürzeste Seite des gleichschenkligen Dreiecks (27) bevorzugt eine Länge zwischen 20mm und 40mm, weiterhin bevorzugt eine Länge zwischen 25mm und 35mm und insbesondere eine Länge von 29mm aufweist.

6. Batteriemodul nach einem der Ansprüche 2 bis 5, **dadurch gekennzeichnet, dass**
die innerhalb des Strömungsraumes (4) angeordneten Abstandselemente (11) in einer Ebene parallel zu der ersten Oberfläche (7) und/oder der zweiten Oberfläche (8) eine kreisförmige, quadratische, runde, ovale, elliptische oder rechteckige Querschnittsfläche (26) aufweisen, wobei insbesondere eine kreisförmige Querschnittsfläche (26) bevorzugt einen Durchmesser (261) von 10mm bis 20mm und weiterhin bevorzugt einen Durchmesser (261) von 15mm bis 17mm aufweist.

7. Batteriemodul nach einem der Ansprüche 2 bis 6, **dadurch gekennzeichnet, dass**
eine zu der ersten Oberfläche (7) und/oder der zweiten Oberfläche (8) parallele Querschnittsfläche der Stromumlenkungseinheit (4) eine asymmetrische Form aufweist, wobei
insbesondere die Querschnittsflächen (28, 29) in dem ersten Bereich (19) und dem zweiten Bereich (20) eine unterschiedliche Form aufweisen.

8. Batteriemodul nach Anspruch 7, **dadurch gekennzeichnet, dass** die Querschnittsfläche (28) in dem ersten Bereich (19) einen ersten Abschnitt (281) und einen zweiten Abschnitt (282) aufweist, welche L-förmig zueinander angeordnet sind, insbesondere L-förmig abgerundet angeordnet sind und/oder dass
die Querschnittsfläche (29) in dem zweiten Bereich (20) zumindest einen ersten Abschnitt (29, 291), welcher I-förmig ausgeführt ist, aufweist und weiterhin bevorzugt insbesondere einen zweiten Abschnitt (292) aufweist und der erste Abschnitt (291) und der zweite Abschnitt (292) T-förmig zueinander angeordnet sind.

9. Batteriemodul nach einem der Ansprüche 2 bis 8, **dadurch gekennzeichnet, dass**
die erste Oberfläche (7) des ersten Temperierelements (5) und die zweite Oberfläche (8) des zweiten Temperierelements (6) einen Abstand (12) von bevorzugt 1mm bis 5mm, weiterhin bevorzugt von 2mm bis 3mm und insbesondere einen Abstand (12) von 2,5mm aufweisen.

10. Batteriemodul nach einem der vorhergehenden Ansprüche, **dadurch gekennzeichnet, dass**
die von dem Strömungsraum (4) abgewandte Oberfläche (13) der Temperiervorrichtung (3) eben ausgebildet ist.

11. Verfahren zur Herstellung eines Batteriemodul nach einem der Ansprüche 1 bis 10, wobei
in einem ersten Schritt die Abstandelemente (11) an einem der Temperierkörper (5,6) angeordnet werden oder ein Temperierkörper (5,6) derart ausgebildet wird, dass dieser die Abstandselemente (11) umfasst,
in einem zweiten Schritt die Stromumlenkungseinheit (15) an einem der Temperierkörper (5,6) angeordnet wird oder ein Temperierkörper (5,6) derart ausgebildet wird, dass dieser die Stromumlenkungseinheit (15) umfasst, wobei
die Stromumlenkungseinheit (15) eine entlang der Stromumlenkungseinheit (15) von einem ersten Ende (24) zu einem zweiten Ende (25) der Stromumlenkungseinheit (15) verlaufende Längsrichtung (16) aufweist und die Stromumlenkungseinheit (15) eine erste Seitenfläche (17) und zweite Seitenfläche (18) ausbildet, weiche entlang der Längsrichtung (16) an sich einander gegenüberliegen Seiten der Stromlenkungseinheit (15) angeordnet sind,
in einem dritten Schritt der erste Temperierkörper (5) und der zweite Temperierkörper (6) unter Ausbildung eines im Wesentlichen abgeschlossen Strömungsraumes (4) miteinander verbunden werden, sodass die Stromumlenkungseinheit (15) innerhalb des Strömungsraumes (4) angeordnet ist und die erste Seitenfläche (17) und die zweite Seitenfläche (18) zumindest abschnittsweise direkt benachbart zu einem Abstandelement (11,111. 112) angeordnet sind
wobei der Verbindungsprozess insbesondere als Walzplattierprozess ausgeführt ist, wobei an einer von dem Strömungsraum (4) abgewandten Oberfläche (13) der Temperiervorrichtung (3) zumindest eine Batteriezelle (2) angeordnet wird.

## Claims

1. Battery module with a temperature control apparatus with a substantially closed flow space (4) which has a multiplicity of spacer elements (11),
the spacer elements (11) being arranged within the flow space (4), and
the temperature control apparatus (3) having, furthermore, a flow deflection unit (15) which is arranged within the flow space (4), with a longitudinal direction (16) which runs along the flow deflection unit (15) from a first end (24) to a second end (25) of the flow deflection unit (15),
the flow deflection unit (15) configuring a first side face (17) and second side face (18) which are arranged along the longitudinal direction (16) on opposite sides of the flow deflection unit (15), the first side face (17) and the second side face (18) being arranged at least in sections directly adjacently with respect to a spacer element (11, 111, 112),
the flow space (4) configuring a first region (19) and a second region (20),
in which spacer elements (11) are arranged in each case, a first connector (22) which is configured for the inlet of temperature control fluid into the flow space (4) and a second connector (23) which is configured for the outlet of temperature control fluid out of the flow space (4) being arranged between the first region (19) and the second region (20) of the flow space (4), **characterized in that**
at least one battery cell (2) is arranged on a surface (13) of the temperature control apparatus (3), which surface (13) faces away from the flow space (4).

2. Battery module according to Claim 1,
with a first temperature control body (5) with a first surface (7) and a second temperature control body (6) with a second surface (8), which temperature control bodies are configured in each case substantially from a planar main body,
the first surface (7) and the second surface (8) of the temperature control bodies (5, 6) being spaced apart from one another, in particular being arranged parallel to one another, by means of the multiplicity of spacer elements (11) with the configuration of the flow space (4),
the spacer elements (11) making contact in each case with the first surface (7) and/or the second surface (8), in particular being connected in each case to the first surface (7) and/or the second surface (8).

3. Battery module according to Claim 2, **characterized in that**
the first temperature control body (5) and/or the second temperature control body (6) are/is configured from a metallic material, in particular from aluminium, or from plastic.

4. Battery module according to either of Claims 2 to 3, **characterized in that**
the first temperature control body (5) and/or the second temperature control body (6) comprise/comprises the multiplicity of spacer elements (11), the spacer elements (11) protruding in each case out of the plane of the planar main body of the temperature control body (5, 6).

5. Battery module according to one of the preceding claims, **characterized in that**
the spacer elements (11) are arranged in regular structures with respect to one another, and
three spacer elements (11) which are directly adjacent with respect to one another in each case form an isosceles triangle (27),
a shortest side of the isosceles triangle (27) preferably having a length between 20 mm and 40 mm, further preferably a length between 25 mm and 35 mm, and, in particular, a length of 29 mm.

6. Battery module according to one of Claims 2 to 5, **characterized in that**
the spacer elements (11) which are arranged within the flow space (4) have a circular, square, round, oval, elliptical or rectangular cross-sectional area (26) in a plane parallel to the first surface (7) and/or the second surface (8),
a circular cross-sectional area (26), in particular, preferably having a diameter (261) of from 10 mm to 20 mm, and further preferably having a diameter (261) of from 15 mm to 17 mm.

7. Battery module according to one of Claims 2 to 6, **characterized in that**
a cross-sectional area, parallel to the first surface (7) and/or the second surface (8), of the flow deflection unit (4) has an asymmetrical shape,
the cross-sectional areas (28, 29) having, in particular, a different shape in the first region (19) and the second region (20).

8. Battery module according to Claim 7, **characterized in that**
the cross-sectional area (28) in the first region (19) has a first portion (281) and a second portion (282) which are arranged in an L-shaped manner with respect to one another, in particular are arranged in a manner which is rounded in an L-shape, and/or **in that** the cross-sectional area (29) in the second region (20) has at least a first portion (29, 291) which is of I-shaped configuration, and further preferably has, in particular, a second portion (292), and the first portion (291) and the second portion (292) are arranged in a T-shaped manner with respect to one another.

9. Battery module according to one of Claims 2 to 8, **characterized in that**
the first surface (7) of the first temperature control element (5) and the second surface (8) of the second temperature control element (6) are at a spacing (12) of preferably from 1 mm to 5mm, further preferably from 2 mm to 3 mm, and, in particular, are at a spacing (12) of 2.5 mm.

10. Battery module according to one of the preceding claims, **characterized in that**
that surface (13) of the temperature control apparatus (3) which faces away from the flow space (4) is of planar configuration.

11. Method for producing a battery module according to one of Claims 1 to 10,
in a first step, the spacer elements (11) being arranged on one of the temperature control bodies (5, 6), or a temperature control body (5, 6) being configured in such a way that it comprises the spacer elements (11),
in a second step, the flow deflection unit (15) being arranged on one of the temperature control bodies (5, 6), or a temperature control body (5, 6) being configured in such a way that it comprises the flow deflection unit (15),
the flow deflection unit (15) having a longitudinal direction (16) which runs along the flow deflection unit (15) from a first end (24) to a second end (25) of the flow deflection unit (15), and the flow deflection unit (15) configuring a first side face (17) and second side face (18) which are arranged along the longitudinal direction (16) on opposite sides of the flow deflection unit (15),
in a third step, the first temperature control body (5) and the second temperature control body (6) being connected to one another with the configuration of a substantially closed flow space (4), with the result that the flow deflection unit (15) is arranged within the flow space (4), and the first side face (17) and the second side face (18) are arranged at least in sections directly adjacently with respect to a spacer element (11, 111, 112),
the connecting process being configured, in particular, as a roll cladding process, at least one battery cell (2) being arranged on a surface (13) of the temperature control apparatus (3), which surface (13) faces away from the flow space (4).

## Revendications

1. Module de batterie doté d'un dispositif d'équilibrage de température,
comprenant un espace d'écoulement (4) substantiellement fermé qui présente une pluralité d'éléments d'écartement (11), dans lequel
les éléments d'écartement (11) sont disposés à l'intérieur de l'espace d'écoulement (4), et
le dispositif d'équilibrage de température (3) présente en outre une unité de déviation de flux (15) disposée à l'intérieur de l'espace d'écoulement (4)
ayant une direction longitudinale (16) s'étendant le long de l'unité de déviation de flux (15) d'une première extrémité (24) à une deuxième extrémité (25) de l'unité de déviation de flux (15), dans lequel
l'unité de déviation de flux (15) réalise une première surface latérale (17) et une deuxième surface latérale (18)
qui sont disposées le long de la direction longitudinale (16) sur des côtés opposés l'un à l'autre de l'unité de déviation de flux (15), la première surface latérale (17) et la deuxième surface latérale (18) étant disposées de manière directement adjacente au moins par endroits à un élément d'écartement (11, 111, 112), l'espace d'écoulement (4) réalisant une première zone (19) et une deuxième zone (20),
dans lesquelles des éléments d'écartement (11) sont disposés respectivement, dans lequel
entre la première zone (19) et la deuxième zone (20) de l'espace d'écoulement (4),
un premier raccord (22) réalisé pour admettre un fluide d'équilibrage de température dans l'espace d'écoulement (4) et un deuxième raccord (23) réalisé pour évacuer un fluide d'équilibrage de température de l'espace d'écoulement (4) sont disposés,
**caractérisé en ce que** sur une surface (13), détournée de l'espace d'écoulement (4), du dispositif d'équilibrage de température (3), au moins un élément de batterie (2) est disposé.

2. Module de batterie selon la revendication 1,
comprenant un premier corps d'équilibrage de température (5) ayant une première surface (7) et un deuxième corps d'équilibrage de température (6) ayant une deuxième surface (8) qui sont réalisés respectivement substantiellement à partir d'un corps de base planaire, dans lequel
la première surface (7) et la deuxième surface (8) du corps d'équilibrage de température (5, 6) sont espacées l'une de l'autre au moyen de la pluralité d'éléments d'écartement (11) en réalisant l'espace d'écoulement (4), en étant en particulier disposées en parallèle l'une à l'autre, dans lequel
les éléments d'écartement (11) entrent respectivement en contact avec la première surface (7) et/ou la deuxième surface (8), en particulier en étant reliées respectivement à la première surface (7) et/ou à la deuxième surface (8).

3. Module de batterie selon la revendication 2, **caractérisé en ce que** le premier corps d'équilibrage de température (5) et/ou le deuxième corps d'équilibrage de température (6) sont réalisés en matériau métallique, en particulier en aluminium, ou en matière plastique.

4. Module de batterie selon l'une quelconque des revendications 2 et 3, **caractérisé en ce que** le premier corps d'équilibrage de température (5) et/ou le deuxième corps d'équilibrage de température (6) comprennent la pluralité des éléments d'écartement (11), les éléments d'écartement (11) faisant respectivement saillie à partir du plan du corps de base planaire du corps d'équilibrage de température (5, 6) .

5. Module de batterie selon l'une quelconque des revendications précédentes, **caractérisé en ce que**
les éléments d'écartement (11) sont disposés en structures régulières les uns par rapport aux autres, et
trois éléments d'écartement (11) directement voisins les uns aux autres forment respectivement un triangle isocèle (27), dans lequel
un côté le plus court du triangle isocèle (27) présente de préférence une longueur comprise entre 20 mm et 40 mm, de plus grande préférence une longueur comprise entre 25 mm et 35 mm, et en particulier une longueur de 29 mm.

6. Module de batterie selon l'une quelconque des revendications 2 à 5, **caractérisé en ce que**
les éléments d'écartement (11) disposés à l'intérieur de l'espace d'écoulement (4) présentent dans un plan en parallèle à la première surface (7) et/ou à la deuxième surface (8) une superficie de la section (26) circulaire, carrée, ronde, ovale, elliptique ou rectangulaire, dans lequel
en particulier une superficie de la section circulaire (26) présente de préférence un diamètre (261) de 10 mm à 20 mm et de plus grande préférence un diamètre (261) de 15 mm à 17 mm.

7. Module de batterie selon l'une quelconque des revendications 2 à 6, **caractérisé en ce qu'**une superficie de la section parallèle à la première surface (7) et/ou à la deuxième surface (8) de l'unité de déviation de flux (4) présente une forme asymétrique, dans lequel
en particulier les superficies de la section (28, 29) présentent une forme différente dans la première zone (19) et la deuxième zone (20).

8. Module de batterie selon la revendication 7, **caractérisé**
**en ce que** la superficie de la section (28) présente dans la première zone (19) une première partie (281) et une deuxième partie (282) qui sont disposées en forme de L l'une par rapport à l'autre, en étant en particulier disposées en forme de L arrondie, et/ou
**en ce que** la superficie de la section (29) dans la deuxième zone (20) présente au moins une première partie (29, 291) qui est réalisée en forme I, et présente de plus grande préférence en particulier une deuxième partie (292), et la première partie (291) et la deuxième partie (292) sont disposées en forme de T l'une par rapport à l'autre.

9. Module de batterie selon l'une quelconque des revendications 2 à 8, **caractérisé en ce que** la première surface (7) du premier élément d'équilibrage de température (5) et la deuxième surface (8) du deuxième élément d'équilibrage de température (6) présentent un écartement (12) de préférence de 1 mm à 5 mm, de plus grande préférence de 2 mm à 3 mm, et en particulier un écartement (12) de 2,5 mm.

10. Module de batterie selon l'une quelconque des revendications précédentes, **caractérisé en ce que** la surface (13), détournée de l'espace d'écoulement (4), du dispositif d'équilibrage de température (3) est réalisée de manière plane.

11. Procédé de fabrication d'un module de batterie selon l'une quelconque des revendications 1 à 10, dans lequel
dans une première étape, les éléments d'écartement (11) sont disposés sur un corps d'équilibrage de température (5, 6), ou un corps d'équilibrage de température (5, 6) est réalisé de telle sorte qu'il comprend les éléments d'écartement (11),
dans une deuxième étape, l'unité de déviation de flux (15) est disposée sur l'un des corps d'équilibrage de température (5, 6), ou un corps d'équilibrage de température (5, 6) est réalisé de telle sorte qu'il comprend l'unité de déviation de flux (15), dans lequel
l'unité de déviation de flux (15) présente une direction longitudinale (16) s'étendant le long de l'unité de déviation de flux (15) d'une première extrémité (24) à une deuxième extrémité (25) de l'unité de déviation de flux (15), et l'unité de déviation de flux (15) réalise une première surface latérale (17) et une deuxième surface latérale (18) qui sont disposées le long de la direction longitudinale (16) sur des côtés opposés l'un à l'autre de l'unité de déviation de flux (15),
dans une troisième étape, le premier corps d'équilibrage de température (5) et le deuxième corps d'équilibrage de température (6) sont reliés l'un à l'autre en réalisant un espace d'écoulement (4) substantiellement fermé de sorte que l'unité de déviation de flux (15) est disposée à l'intérieur de l'espace d'écoulement (4), et la première surface latérale (17) et la deuxième surface latérale (18) sont disposées de manière directement adjacente au moins par endroits à un élément d'écartement (11, 111, 112),
le processus de raccordement étant réalisé en particulier sous la forme d'un processus de placage par laminage, au moins un élément de batterie (2) étant disposé sur une surface (13), détournée de l'espace d'écoulement (4), du dispositif d'équilibrage de température (3).
